**Europäisches Patentamt**

**European Patent Office**

**Office européen des brevets**

(11) Veröffentlichungsnummer: **0 039 084**
**A2**

(12) **EUROPÄISCHE PATENTANMELDUNG**

(21) Anmeldenummer: **81103203.6**

(22) Anmeldetag: **29.04.81**

(51) Int. Cl.³: **H 04 M 1/274**
**G 06 K 7/08, G 06 K 7/10**

(30) Priorität: **30.04.80 DE 3016634**

(43) Veröffentlichungstag der Anmeldung:
**04.11.81 Patentblatt 81/44**

(84) Benannte Vertragsstaaten:
**AT BE CH FR GB IT LI LU NL SE**

(71) Anmelder: **Seidensticker, Horst**
**Brennerstrasse 186**
**D-4800 Bielefeld 1(DE)**

(72) Erfinder: **Seidensticker, Horst**
**Brennerstrasse 186**
**D-4800 Bielefeld 1(DE)**

**Der weitere Erfinder hat auf seine Nennung verzichtet**

(74) Vertreter: **Rau, Günther, Dipl.-Ing.**
**Upfeldweg 23**
**D-4800 Bielefeld 15(DE)**

(54) Anordnung zur Eingabe von Ziffernfolgen in ein Terminal zur Betätigung von numerisch gesteuerten Vorrichtungen.

㉗ Mittels eines Lesegeräts 7 (Handmodul) werden optisch oder magnetisch aufgelistete Steuerdaten 3 erfaßt, in einem Elektronikmodul 9 gespeichert und erforderlichenfalls wiederholbar in ein Terminal 5 eingegeben. Die Eingabe der Steuerdaten 3 in das Terminal 5 erfolgt durch elektromagnetische Betätigung der Tastatur 19 des Terminals 5, wobei elektromagnetische Betätigungsglieder 35 auf die Tastatur 19, 33 des in das Elektronikmodul 9, 25 eingesetzten Terminals 5, 27 einwirken. Als Ausführungsbeispiel ist eine Vorrichtung zur wahlweisen Eingabe von in Listen 1 bereitgehaltenen Rufnummern (Steuerdaten 3) in einen mit Tasten 33 ausgestatteten Fernsprechapparat 27 beschrieben.

./...

Croydon Printing Company Ltd.

Fig.1

B E S C H R E I B U N G

Es ergibt sich bei Vorrichtungen mit numerischer Steuerung
im zunehmenden Maße die Notwendigkeit zur Auslösung eines
Arbeitsganges eine Vielzahl von Ziffern in die Eingabevorrichtung, im folgenden Terminal genannt, einzugeben. Ziffernfolgen von 10 Stellen und mehr sind keine Seltenheit.
Wenn eine solche Vielzahl von Ziffern einzugeben ist, erhöht
sich die Gefahr von Fehlern durch Verwechslungen, Vertauschungen in der Reihenfolge oder Fehleingabe. Diesem Mangel
hat man dadurch abzuhelfen versucht, indem solche Ziffernfolgen fest eingespeichert und durch die Anwahl des Speicherplatzes abgerufen werden. Es war dann lediglich notwendig, die geringere Stellenzahl der Speicherplätze anzuwählen. Aber auch hierbei ergeben sich schnell gewisse Verhältnisse, die unbefriedigend sind. Bei der Anwendung dieses
Prinzips z. B. in Fernsprechanlagen werden zur Speicherung
von mehr als 200 Rufnummern bereits Geräte mit einem so
großen Platzbedarf benötigt, daß ihr Einsatz nicht mehr
sinnvoll ist. Rufnummerngeber für Fernsprechanlangen sind
außerdem noch mit der Auflage belastet, daß sie nur mit
einer Genehmigung der Postverwaltung vertrieben werden
dürfen und dazu noch laufende Kosten wegen der an die Postverwaltung zu zahlenden Gebühren verursachen. Jede Erweiterung des Umfangs der Speicherzahl ist mit erheblichen
Kosten verbunden. Ein weiterer Nachteil solcher Anlagen
liegt darin, daß der Benutzer bis zu 3 oder sogar mehr Tasten
der Fernsprechanlage betätigen muß, um eine gespeicherte
Telefon-Nummer zu erreichen, bevor sie automatisch ausgegeben wird. Bei dem Einsatz größerer Speicher für mehr als
1000 Telefon-Nummern muß die Telefonistin nach dem Heraussuchen der Speicherplatz-Nummer aus einem Verzeichnis
mindestens 4 Tasten der Fernsprechanlage betätigen. Das

BAD ORIGINAL

Eintasten dieser Speicherplatz-Nummern ist wiederum mit den
Nachteilen der möglichen Fehlbedienungen und Irrtümer
verbunden.

Der Erfindung liegt die Aufgabe zu Grunde, eine Anordnung
zur Eingabe von Ziffernfolgen in ein Terminal zu beschreiben,
durch das die Bedienung numerisch gesteuerter Vorrichtungen
ganz wesentlich erleichtert wird und die Gefahr von Fehleingaben selbst vielstelliger Ziffernfolgen praktisch beseitigt.
Diese Aufgabe wird an einer Anordnung zur Eingabe von Ziffernfolgen in ein Terminal zur Betätigung von numerisch gesteuerten Vorrichtungen durch die im Kennzeichen des 1.
Patentanspruchs angegebenen Merkmale gelöst. Weitere Ausgestaltungen der Erfindung sind durch die Merkmale der
Unteransprüche gekennzeichnet.

Der wesentliche Vorteil der Erfindung ist darin zu sehen,
daß für die eigentliche Eingabe einer mehrziffrigen Steuerzahl keine Taste mehr zu betätigen ist und die Anzahl der
gespeicherten Steuerzahlen unbegrenzt ist. In der Anwendung
der Erfindung als Rufnummerngeber für Fernsprechapparate
oder Fernsprechanlagen braucht keine galvanische Verbindung
mit dem Fernsprechgerät hergestellt oder in das Fernsprechgerät eingegriffen zu werden, weshalb keine laufende Postgebühren anfallen.

Die Erfindung wird nun anhand der Zeichnungen im einzelnen
beschrieben. Es zeigen:

 Fig. 1 eine vereinfachte Darstellung der Anordnung,
 Fig. 2 ein Blockschaltbild zur Anordnung nach Fig. 1,
 Fig. 3 eine perspektivische Ansicht eines Steuergerätes u.
 Fig. 4 Einzelheiten der Vorrichtung zur Betätigung der
   Tasten.

BAD ORIGINAL

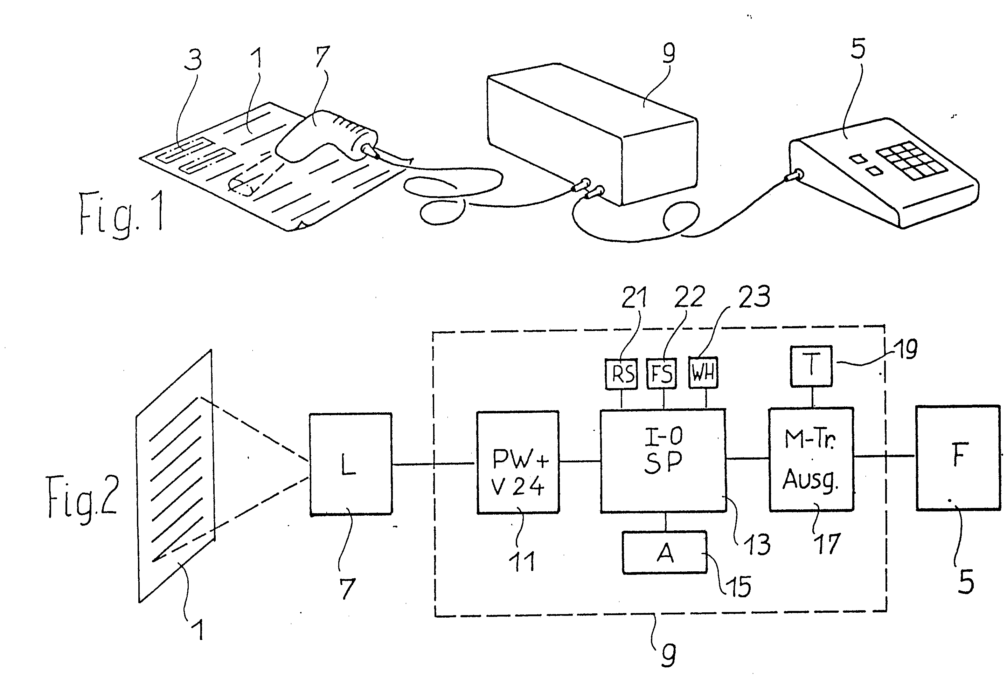

Die prinzipielle Anordnung der erfindungsgemäßen Vorrichtung ergibt sich aus den Fig. 1 und 2. Auf einem Aufzeichnungsträger 1 sind eine Mehrzahl von Steuerdaten 3 in einer maschi nenlesbaren Form z. B. in OCRA-Schrift oder einem Strich-Code aufgezeichnet, die in Abhängigkeit von gegebenen Umständen in ein Terminal 5 etwa zur Steuerung einer Verteileranlage, eines Produktionsablaufs oder einer Fernsprechanlage eingegeben werden sollen. Die optische oder magnetische Ablesung der Steuerdaten 3 erfolgt von Hand durch Überstreichen mit dem Kopf eines Lesegeräts 7. Es ist zweckmäßig, die Steuerdaten an erster Stelle mit einem Zeichen, z. B. einem Buchstaben zu versehen, der eine Aussage über die Anzahl der Stellen macht. Ein "A" könnte für 1 Stelle, ein "B" für 2 Stellen, ein "C" für 3 Stellen usw. stehen. Es kann auch vorgesehen werden, eine zusätzliche Ziffer als Prüfziffer einzusetzen, die lediglich zur Überprüfung der Steuerdaten in bekannter Weise dient, aber keine Steuerfunktion ausübt. Bei derart ausgestatteten Steuerdaten ist es möglich, die Abtastung sowohl von links nach rechts als auch von rechts nach links durchzuführen, da durch den Code-Buchstaben vor der 1. Ziffer Richtung und Anzahl der Ziffern erfaßt und überwacht werden. Fehler bei der Abtastung werden durch ein akustisches oder optisches Signal angezeigt, wodurch das Bedienungspersonal zu einer Wiederholung der Abtastung aufgefordert wird.

Das Lesegerät 7 ist an ein Elektronikmodul 9 angeschlossen, in dem die von den Steuerdaten abgetasteten Impulse aufbereitet, ausgewertet, geprüft und gespeichert werden. Je nach den geforderten Leistungen kann der Speicher vorzugsweise bis zu 16 verschiedene Steuerdaten mit z. B. je 16 Stellen aufnehmen, die anschließend in der eingegebenen Reihenfolge wieder ausgegeben werden können. Es wird

BAD ORIGINAL

gegebenenfalls zweckmäßig sein, ein Anzeigentableau vorzusehen, auf dem die jeweils abgelesenen oder aus dem Speicher
abgerufenen Steuerdaten zur Information oder Überwachung
durch das Bedienungspersonal angezeigt werden.

In den Fig. 2 bis 4 ist ein Ausführungsbeispiel der Erfindung
als Rufnummerngeber dargestellt, in den ein Fernsprechapparat
mit einer Dezimaltastatur eingesetzt werden kann, ohne galvanische Verbindungen zwischen dem Rufnummerngeber und dem
Fernsprechapparat herstellen zu müssen. Das Elektronikmodul
9 (Fig.2) besteht im wesentlichen aus einem Pegelwandler 11,
der aus den vom Lesegerät 7 gelieferten über einem mittleren
Helligkeitspegel liegenden Impulsen gewonnenen Bits die gelesenen Zeichen (Buchstaben und Ziffern) ermittelt, einem
Speicher 13 mit zugeordneten Steuergliedern als Input-Output-
Einheit und einer Anzeigeeinheit 15 sowie einem Magnettreiber
17 mit einer Eingabetastatur 19.

Um die Anordnung universell einsetzen zu können, ist es zweckmäßig, das Elektronikmodul 9 für die Aufnahme von Steuerdaten
mit einer Stellenzahl bis zu 16 Stellen auszulegen und dem
Speicher 13 eine Kapazität von 16 Speicherplätzen zu geben.
Der Speicher 13 wird durch drei Tasten gesteuert: Die Nullstell-Taste 21 erlaubt das Löschen einer gelesenen Rufnummer,
wenn diese irrtümlich eingegeben, fehlerhaft gelesen oder
nicht mehr benötigt wird. Die Fortschalt-Taste 22 wird betätigt, wenn die nächste Rufnummer aus dem Speicher abgerufen und in den Fernsprechapparat 5 eingegeben werden soll.
Die Betätigung der Wiederhol-Taste 23 ist erforderlich,
wenn der Teilnehmer neu angewählt werden muß, weil bei einer
Ziffer der Rufnummer, der Länder- oder Ortsnetzkennzahl ein
Besetztzeichen auftrat.

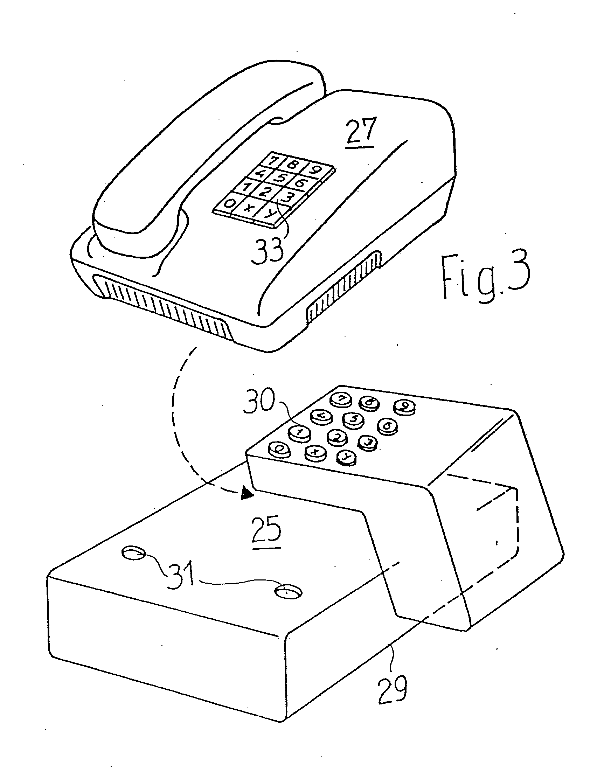

In Fig. 3 ist ein Ausführungsbeispiel für das Anschlußgerät
25 an den Fernsprechapparat 27 dargestellt. Im Unterteil 29

BAD ORIGINAL

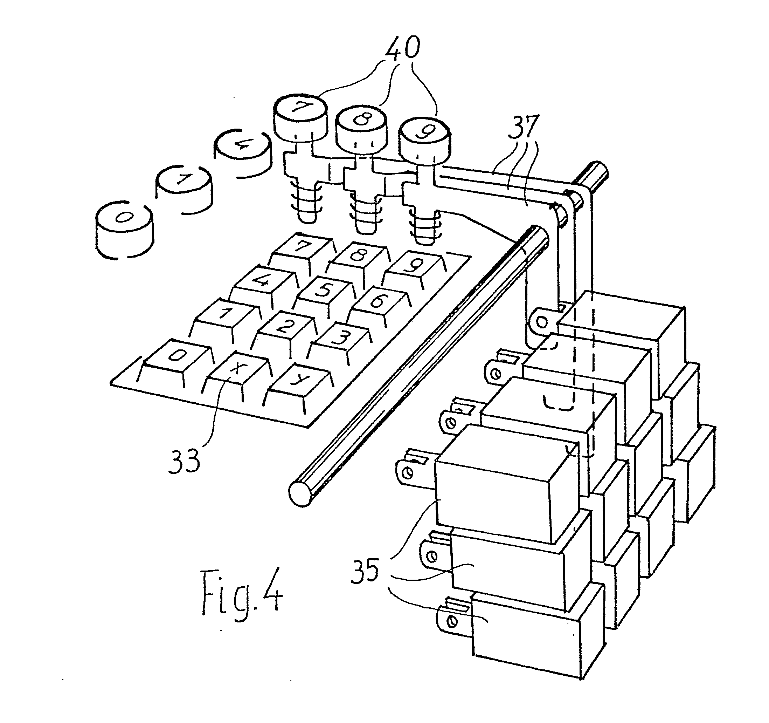

des Anschlußgeräts 25 kann das gesamte Elektronikmodul 9 mit Ausnahme des Magnettreibers 17 und der Eingabetastatur 19 untergebracht werden. Die Eingabetastatur 19 ist in einer Baueinheit 30 oberhalb des Unterteils so angeordnet, daß der Fernsprechapparat 27 zwischen beide Geräteteile einschiebbar ist. Ausbuchtungen 31 auf der Oberseite des Unterteils 29 sichern eine definierte Lage des Fernsprechapparates 27 gegenüber der Baueinheit 30, in der für jede Taste der Zehnertastatur 33 ein Betätigungsmagnet 35 (Fig.4) zugeordnet ist. In Fig. 4 sind die Betätigungsmagnete 35 seitlich der Zehnertastatur 33 angeordnet, und die Übertragung der Bewegung der Anker der Magnete erfolgt über Winkelhebel 37 auf die Stößel 39 zur Betätigung der Tastatur 33. Die Stößel 39 sind nach oben zu Tasten 40 verlängert, die eine Ziffernwahl von Hand gestatten. Es ist selbstverständlich möglich, die Magnete 35 auch oberhalb der Tastatur 33 anzuordnen. Das Unterteil 29 ist mit den Nullstell-, Fortschalt- und Wiederhol-Tasten 21 bis 23 sowie mit einer 16-stelligen Anzeige für die jeweils eingegebenen oder abgerufenen Steuerdaten (Rufnummern) ausgestattet. Als Zusatzeinrichtung kann naheliegenderweise auch ein Adapter für Lautsprecherwiedergabe und Gesprächsaufzeichnung mit dem Rufnummerngeber integriert werden.

BAD ORIGINAL

**0039084**

Patentanwalt                                    22. April 198?
Dipl.-Ing. Günther Rau                          2100
Bielefeld


Horst Seidensticker, 4800 Bielefeld 1

---

Anordnung zur Eingabe von Ziffernfolgen in ein Terminal
zur Betätigung von numerisch gesteuerten Vorrichtungen

---

## P A T E N T A N S P R Ü C H E

1. Anordnung zur Eingabe von Ziffernfolgen in ein Terminal
   oder ein numerisch gesteuertes Gerät,
   gekennzeichnet durch ein Handmodul für die optische oder
   magnetische Erfassung aufgelisteter Steuerdaten und ein
   Elektronikmodul zur Aufbereitung, Speicherung und wahlweise wiederholbaren Eingabe der Steuerdaten in ein Terminal.

2. Anordnung nach Anspruch 1, dadurch gekennzeichnet, daß das
   Terminal in das Elektronikmodul einsetzbar ist, das die
   Steuerdaten mittels elektromagnetischer Betätigungsglieder
   seriell in eine Tastatur des Terminals eingibt.

3. Anordnung nach den Ansprüchen 1 und 2, dadurch gekennzeichnet, daß das die elektromagnetischen Betätigungsglieder
   enthaltende Betätigungsmodul mit einer Tastatur versehen ist, deren Tastenschäfte mit Stößeln der Betätigungsglieder für die Tastatur des Terminals verbunden sind.

4. Anordnung nach den Ansprüchen 1 bis 3, dadurch gekennzeichnet, daß das Terminal ein Fernsprechapparat ist und
das Elektronikmodul mit einer Taste für die wiederholte
Eingabe der Steuerdaten in die Tastatur des Fernsprechapparates versehen ist.

5. Vorrichtung nach den Ansprüchen 1 bis 4, dadurch gekennzeichnet, daß der Speicher eine Mehrzahl von Steuerdaten
aufnehmen kann, die nacheinander zur Abgabe an das
Terminal abrufbar sind.

BAD ORIGINAL

Fig. 1

3  1  7                    9                    5

Fig. 2

21  22  23

| RS | FS | WH |              T ⌐19

1 —— 7 ——— PW+ V24 —— I-0 S P —— M-Tr. Ausg. —— F

          11        A        13    17        5
                    15

9

1/3

0039084

Fig.3

Fig.4